**Europäisches Patentamt**

**European Patent Office**

**Office européen des brevets**

(11) Veröffentlichungsnummer: **0 164 310**
**A1**

(12) **EUROPÄISCHE PATENTANMELDUNG**

(21) Anmeldenummer: **85810206.4**

(22) Anmeldetag: **06.05.85**

(51) Int. Cl.⁴: **B 26 D 3/16,** B 21 D 24/16

(30) Priorität: **09.05.84 CH 2262/84**

(43) Veröffentlichungstag der Anmeldung: **11.12.85**
**Patentblatt 85/50**

(84) Benannte Vertragsstaaten: **AT BE CH DE FR GB IT LI NL SE**

(71) Anmelder: **Frei, Siegfried, Sammelbühlstrasse, CH-9053 Teufen (CH)**

(72) Erfinder: **Frei, Siegfried, Sammelbühlstrasse, CH-9053 Teufen (CH)**

(74) Vertreter: **Gachnang, Hans Rudolf, Alglsserstrasse 33, CH-8500 Frauenfeld (CH)**

(54) **Verfahren und Vorrichtung zum Trennen eines zylindrischen Dosenrumpfes.**

(57) Nach der Erfindung werden die Dosenrümpfe (9) mit Hilfe von zwei Werkzeugen (2, 16, 60) in einem ersten Arbeitsgang teilweise längs der Trennlinie (24) geschert, derart, dass die beiden Rumpfabschnitte (14, 15) geringfügig zueinander versetzt sind. Im zweiten Arbeitsgang, der dem ersten unmittelbar folgt, wird durch die Werkzeuge (16, 61) der Rumpf (9) vollständig durchgetrennt. Die sich beim Anscheren im ersten Arbeitsgang gebildete Stufe dient im zweiten Arbeitsgang als Führung für die Werkzeuge (16, 61).

ACTORUM AG

Verfahren zum Trennen eines zylindrischen Dosenrumpfes
sowie eine Vorrichtung zum Trennen eines zylindrischen
Dosenrumpfes

*******************************************************

Die vorliegende Erfindung bezieht sich auf ein Verfahren
zum Trennen eines zylindrischen Dosenrumpfes gemäss Oberbegriff des Patentanspruches 1.

Die Erfindung bezieht sich weiter auf eine Vorrichtung
zum Trennen eines zylindrischen Dosenrumpfes gemäss Oberbegriff des Patentanspruches 3.

Es sind bereits ein Verfahren und eine Vorrichtung bekannt, Dosenrümpfe zu trennen. Mit zwei an sich bekannten
Rollenmessern werden die Dosenrümpfe in einem Arbeitsgang
durchgeschnitten. Dabei ist nicht zu vermeiden, dass durch
geringste Ungenauigkeiten in den Schnittverhältnissen (z.B.
taumelnde Messer) schraubenförmig verlaufende Trennlinien
entstehen können, welche dann feine nadelförmige Spiesse
an den Schnittstellen hinterlassen.

Die Aufgabe der Erfindung besteht darin, die Nachteile
des bekannten Verfahrens und der Vorrichtung zu beheben.
Insbesondere besteht die Aufgabe darin, ein Verfahren und
eine Vorrichtung zu schaffen, mit denen Dosenrümpfe brauenfrei und sauber getrennt werden können, ohne dass an den
Trennstellen das benachbarte Material umgebogen wird.

0164310

Nach der Erfindung werden diese Aufgaben mit einem Verfahren gemäss den kennzeichnenden Merkmalen des Patentanspruches 1 sowie einer Vorrichtung gemäss den kennzeichnenden Merkmalen des Patentanspruches 3 gelöst.

Die Scheroperation am fertigen Rumpf, bei der dieser nicht durchgetrennt, sondern vorerst nur geschwächt wird, erlaubt beim nachfolgenden Trennvorgang eine exakte Führung der Werkzeuge und des Dosenrumpfes längs des durch die erste Scheroperation gebildeten Absatzes, so dass die Gefahr der Bildung eines schraubenlinienförmigen Verlaufes der Trennkanten und damit die Bildung von nadelförmigen Spiessen ausgeschlossen wird. Ein Weglaufen der Werkzeuge von der idealen, d.h. geometrisch sauberen Trennlinie wird durch das Aufrechterhalten der Materialstabilität beim Anscheren erhalten.

Ein weiterer Vorteil der Erfindung besteht darin, dass die benachbarten Bereiche der Trennkanten bzw. die Trennkanten beim Brechen nicht umgebogen werden können, weil der Rumpf durch eine weitere Scherung aufgetrennt wird.

Anhand illustrierter Ausführungsbeispiele wird die Erfindung näher beschrieben. Es zeigen:

Figur 1   einen Querschnitt durch das Innen- und das Aussenwerkzeug beim Scheren zur Erzeugung einer Schwächungslinie längs Linie I - I in Fig. 3,

- 3 -

0164310

Figur 2    einen Querschnitt durch das Innen- und das Aussenwerkzeug beim Scheren zum Trennen der Rumpfabschnitt längs Linie II - II in Fig. 3,

Figur 3    einen Schnitt der Vorrichtung längs Linie III -
III in den Figuren 1 und 2,

Figur 4    einen Grundriss einer weiteren Ausführungsform
mit zwei zylindrischen Werkzeugen in schematischer Darstellung.

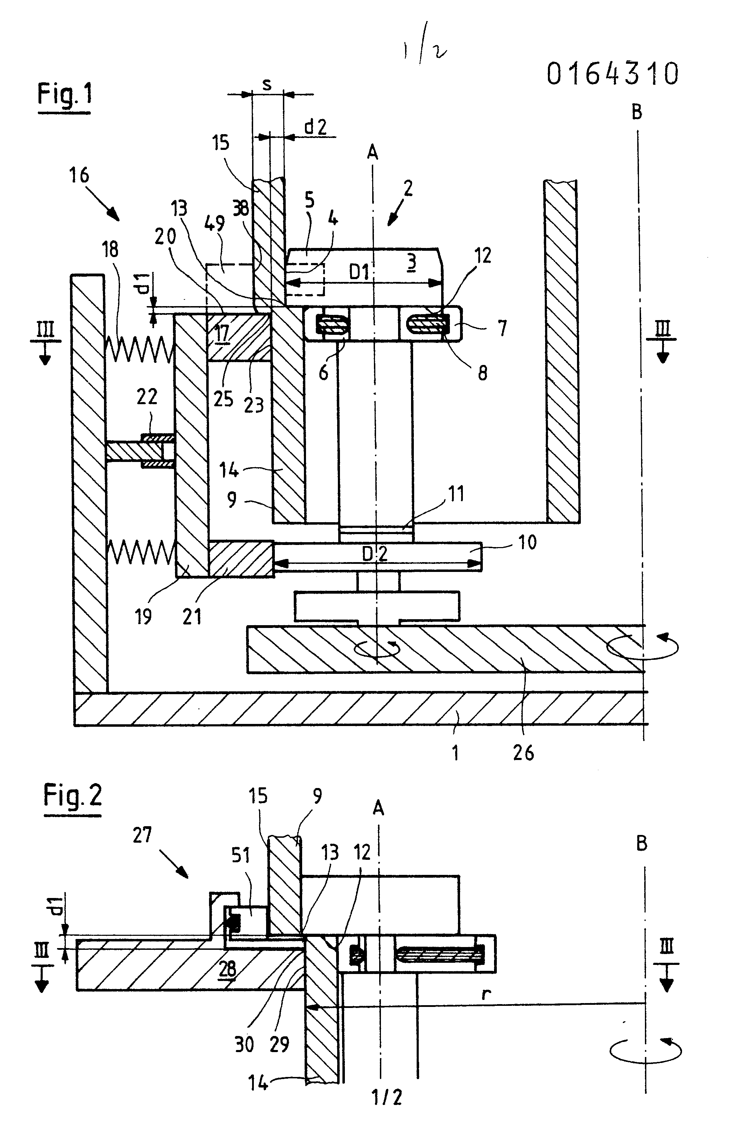

Auf einem drehbar an einem Maschinenständer 1 befestigten
Karussell 26 ist um eine Achse A über einem Antriebsmotor
(nicht gezeigt) ein Innenwerkzeug 2 drehbar gelagert. Das
Innenwerkzeug 2 besteht aus einer an einem Zylinder 3 angebrachten Stützfläche 4. Die Stützfläche 4 kann auch aus
einem oder mehreren ringförmigen, zylindrisch angeordneten
Abschnitten 5 bestehen (vergl. gebrochene Linien in Fig. 1).
Unterhalb der Stützfläche 4 ist in einem Einstich 6 ein Ring
7 eingesetzt.Zwischen dem Ring 7, dessen Innendurchmesser
grösser ist als der Durchmesser des Einstiches 6 ist eine
elastische Einlage 8, z.B. ein Gummi-Ring, eingelegt. Der
Aussendurchmesser des Ringes 7 entspricht etwa dem Durchmesser der Stützfläche 4. Unterhalb des Ringes 7, im Bereich, wo das untere Ende eines auf das Innenwerkzeug 2
aufgesetzten und von einer in den Figuren nicht dargestellten Beschickungsvorrichtung getragenen Dosenrumpfes 9 sicht-

0164310

bar ist, ist eine Scheibe 10 auf der Achse A befestigt. Durch Einlegen oder Entfernen von Zwischenringen 11 kann die Lage der Scherkante 13, welche aus der unteren Stirnfläche 12 und der Stützfläche 4 des Innenwerkzeuges 2 gebildet wird, zur Scherkante 25 des Aussenwerkzeuges 16 das Spiel d1 eingestellt werden.

Das Aussenwerkzeug 16 besteht in der Ausführung nach Figur 1 aus einer bogenförmig ausgebildeten Kurve 17, deren Zentrum sich in der Drehachse B des Karussells 26 befindet, und die auf einer mittels Federn 18 mit dem Maschinenständer 1 radial zur Achse B verschiebbar gelagerten Platte 19 befestigt ist. Die Platte 19 ist mittels Parallelogrammen oder, wie in Figur 1 schematisch dargestellt, einer Teleskopführung 22 planparallel geführt. Die obere Fläche 20 der Kurve 17 liegt parallel zur Stirnfläche 12 des Zylinders 3 und in einem Abstand d1 (Spiel) von ~2 bis 4 Hunderstelmillimetern von dieser entfernt.

An der unteren Kante der Platte 19 ist eine zweite Kurve 21 angebracht, die an der Scheibe 10 anliegt und die gleiche Kontur und Lage bezüglich der Achse B wie die Kurve 17 aufweist.

An der Kurve 17 bildet die Stützfläche 23 mit der oberen Fläche 20 die Scherkante 25. Die Stützfläche 23 liegt in einem Abstand d2 von der Stützfläche 4 des Innenwerkzeuges 2. Der Betrag von d2 hängt von der Blechdicke S des Dosenrumpfes 9 ab und beträgt ca. 20 - 50 % von S.

Die Scherkanten 13 und 25 sind gehärtet oder bestehen aus einem harten und verschleissfesten Material.

Aehnlich aufgebaut wie die in Figur 1 gezeigte Anordnung zum Anscheren von Dosenrümpfen 9 ist die Anordnung nach Figur 2 zum vollständigen Durchtrennen der Dosenrümpfe 9. In Figur 2 sind nur noch die wesentlichen Teile der Vorrichtung gezeigt.

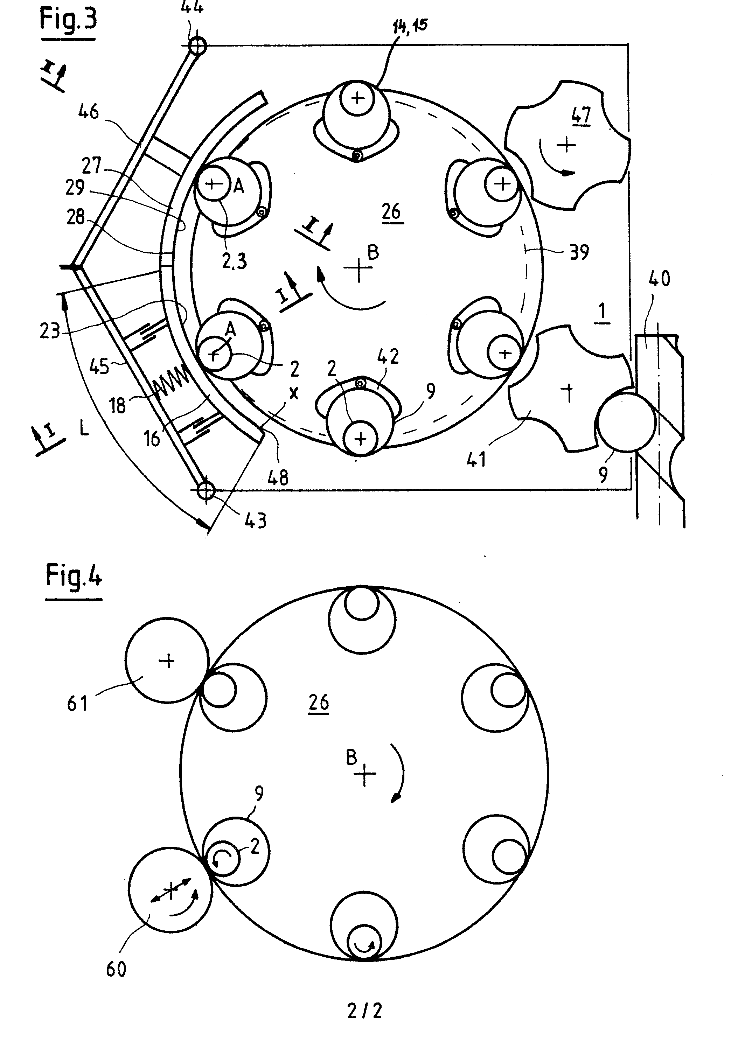

Das Aussenwerkzeug 27 ist im Anschluss an das Aussenwerkzeug 16 angeordnet und ebenfalls als bogenförmige Kurve 28 ausgebildet (vergl. Figur 3). Die Kurve 28 ist fest mit dem Maschinenständer 1 verbunden und weist - analog dem Aussenwerkzeug 16 - eine Stützfläche 29 mit einer Scherkante 30 auf.

Anhand der Figur 3 wird die Anordnung der Werkzeuge 2,16 und 27 auf dem Maschinenständer 1 beschrieben.

Mit einer Förderschnecke 40 und einem Einlaufstern 41 werden Dosenrümpfe 9 dem Innenwerkzeug 2 in bekannter Weise zugeführt, wobei das Absenken der Rümpfe 9 auf das Innenwerkzeug 2 und das Herausnehmen derselben mit einem am Karussell 26 befestigten, vertikal verschiebbaren Dosenaufnahmebehälter 42 erfolgt. Ein solcher Behälter ist schematisch an den Innenwerkzeugen 2 dargestellt. Die Innenwerkzeuge 2 sind in regelmässigen Abständen am Umfang des Karussells 26 angeordnet und über Getriebe um die Achsen A antreibbar.

In Drehrichtung des Karussells 26 gesehen sind auf einem zum Rotationskreis 39 der Drehachsen A konzentrischen Kreisbogen die beiden Aussenwerkzeuge 16 und 27 auf dem Maschinenständer 1 befestigt. Um eine gute Zugänglichkeit zu gewährleisten sind die Werkzeuge 16 und 27 auf zwei um Achsen 43 und 44 schwenkbaren Trägerplatten 45,46 befestigt. Anschliessend an das Aussenwerkzeug 46 ist wiederum ein an sich bekannter Auslaufstern 47 angebracht, dem der nun in Abschnitte 14 und 15 aufgeteilte Dosenrumpf 9 mit dem Dosenaufnahmebehälter 42 zugeführt wird. Vom Auslaufstern 47 gelangen die noch übereinanderliegenden Abschnitte 14 und 15 zu einer Vorrichtung zum Vereinzeln und Einordnen in sich in regelmässigen Abständen folgende und nebeneinanderliegende Abschnitte 14,15,14,15, etc.

Von einer Dosenherstellungsmaschine (bodymaker) gelangen die Dosenrümpfe 9 über den Einlaufstern 41 und den Dosenaufnahmebehälter 42 zum mit dem Karussell 26 umlaufenden Innenwerkzeug 2. Die Dosenrümpfe 9, die einen Durchmesser aufweisen, der denjenigen des Innenwerkzeuges 2 übersteigt, liegen exzentrisch bezüglich der Achse A. An der am weitesten von der Achse B des Karussells 26 entfernten Stelle des Innenwerkzeuges 2 liegt der Dosenrumpf 9 auf der Stützfläche 4 des Zylinders 3 und auf dem Ring 7 auf. Der Aufnahmebehälter 42 trägt bzw. positioniert den Dosenrumpf 9 axial; er kann diesen auch zusätzlich noch an dessen Umfang führen und halten.

Nach einer Karuselldrehung von ca. 100$^{\circ}$ gelangt das Innenwerkzeug 2 an der Stelle X in den Bereich des Aussenwerkzeuges 16, dessen Bogenlänge L mindestens der Länge der Abwicklung des Dosenrumpfes 9 entspricht, vorzugsweise aber länger als diese ist. Um einen harten Aufschlag auf das Aussenwerkzeug 16 zu vermeiden, kann die Stützfläche 23 eine zum Kreis, den die zu äusserst liegende Stelle des Innenwerkzeuges 2 beschreibt, tangentiale Einlaufkurve 48 aufweisen.

Nach dem Einlauf in den Abwälzbereich zwischen den Werkzeugen 2 und 16 wird der Dosenrumpf 9 zwischen dem elastisch gelagerten Ring 7 und der Stützfläche 23 der Kurve 17 im wesentlichen schlupffrei gehalten und auf der Stützfläche 23 abgewälzt. Durch die Kraft der Federn 18, welche das Aussenwerkzeug 16 radial nach innen pressen, wird der Dosenrumpf 9 von den Scherkanten 13 und 25 angeschert. Der genaue Betrag d2 der Scherung, vorzugsweise 50 - 80 % der Blechdicke S kann mit dem Durchmesser D2 der Scheibe 10, welche auf der unteren Kurve 21 abwälzt, bestimmt werden. Selbstverständlich kann auch ein anderer Referenzpunkt zur Bestimmung des freien Weges des Aussenwerkzeuges 16 herangezogen werden. Beispielsweise kann auf der Kurve 17 eine parallel verlaufende Kurve 49 aufgesetzt sein, deren Stützfläche 38 einen Abstand von (S - d2) von der Stützfläche 23 der Kurve 17 aufweist (vergl. Figur 1 in gebrochenen Linien dargestellt).

Nach Beendigung des den Dosenrumpf 9 anscherenden, jedoch nicht trennenden Schervorganges durch das erste Aussenwerkzeug 16 kann sofort der Einlauf des Dosenrumpfes 9 in die Kurve 28 des zweiten Aussenwerkzeuges 27 erfolgen, dessen Stützfläche 29 nicht gefedert ist und dessen Scherkante 30 unter die Stirnfläche 12 greift, sodass der einerseits auf der Stützfläche 4 des Innenwerkzeuges 2 und andererseits auf der Stützfläche 29 des Aussenwerkzeuges 27 aufliegende Dosenrumpf 9 von den Scherkanten 13 und 30 nun vollständig durchgetrennt wird. Der Abstand d1 ist im Aussenwerkzeug 27 um ein Mehrfaches grösser als beim Aussenwerkzeug 16.

Die Eintauchtiefe des Aussenwerkzeuges 27 in das Innenwerkzeug 12 wird durch den festen Abstand der Stützfläche 29 zur Drehachse A bestimmt.

Zur schlupffreien Mitnahme des oberhalb der Trennstelle liegenden Abschnittes 15 kann auf der Kurve 28 eine parallel zur Kurve 28 verlaufende gefederte Schiene 51 angebracht sein, mit welcher der Abschnitt 15 satt an die Stützfläche 4 angepresst werden kann.

In den Figuren 1 bis 3 ist die Erfindung anhand eines Beispieles beschrieben worden, in welchem die Aussenwerkzeuge 16 und 27 als am Umfang des Karussells 26 angeordnete bogenförmige Kurven 17 und 28 ausgebildet sind, längs denen die Dosenkörper 9 abgewälzt werden. In der Figur 4 ist in schematischer Darstellungsweise eine Vorrichtung gezeigt, bei der Aussenwerkzeuge 60 und 61 ähnlich den Innenwerkzeugen 2 als rotierende Zylinder ausgebildet sind. Die Mantelflächen dieser Aussenwerkzeuge 60 und 61 sind analog der dem Innenwerkzeug 2 zugekehrten Konturen der Aussenwerkzeuge 16 und 27 ausgestaltet. Das erste Aussenwerkzeug 60 zum Anscheren der Dosenrümpfe 9 kann als Ganzes auf einer radial zur Achse B verlaufenden Führung verschiebbar gelagert und mittels Federkraft an das Innenwerkzeug andrückbar sein, oder der die Stützfläche und Scherkante bildende Ring ist, wie der Ring 7 auf dem Innenwerkzeug 2, radial-elastisch taumelbar auf dem Aussenwerkzeug 60 gehalten.

Das Anscheren und das vollständige Durchscheren erfolgt auf der Vorrichtung gemäss Figur 4 jeweils taktweise bei stillstehendem Karussell 26.

Patentansprüche

1. Verfahren zum Trennen eines zylindrischen Dosenrumpfes längs einer umlaufenden Trennlinie in zwei Abschnitte mit einem Innenwerkzeug und einem Aussenwerkzeug, dadurch gekennzeichnet, dass der Dosenrumpf (9) in einem ersten Arbeitsgang längs der Trennlinie (24) angeschert wird, derart, dass das Blech der beiden Abschnitte (14,15) um 50 bis 80 % von deren Dicke (S) radial versetzt wird, und dass in einem zweiten an den ersten anschliessenden Arbeitsgang die beiden Abschnitte (14,15) vollständig voneinander getrennt werden.

2. Verfahren nach Anspruch 1, dadurch gekennzeichnet, dass

a) der Rumpf (9) oberhalb der Trennlinie (24) radial unverschiebbar auf dem Innenwerkzeug (2) aufliegend geführt wird,

b) der Rumpf (9) unterhalb der Trennlinie (24) auf dem Innenwerkzeug (2) radial nachgiebig geführt und vom ersten Aussenwerkzeug (16,60) sukzessive radial nach innen gedrängt wird, derart, dass

c) die den Rumpf (9) längs der Trennlinie (24) schwächende Anscherung erfolgt, und dass

d) anschliessend der Rumpf (9) unterhalb der Trennlinie (24) vom zweiten Aussenwerkzeug (16, 61) weiter nach innen gedrängt wird bis

e) der durch die Anscherung geschwächte Rumpf (9) längs der Trennlinie (24) vollständig durchgetrennt ist.

3. Vorrichtung zum axialen Trennen eines zylindrischen Dosenrumpfes in zwei Abschnitte, bestehend aus einem Innenwerkzeug und einem Aussenwerkzeug, welche Werkzeuge in radialer Richtung gegeneinander verschiebbar sind, sowie einem Antrieb zum Abwälzen des zwischen dem Innenwerkzeug und dem Aussenwerkzeug auf den Stützflächen liegenden Dosenrumpfes (9), dadurch gekennzeichnet, dass das Innenwerkzeug (2) als ein um eine Achse (A) drehbarer Zylinder (3) mit einer zur Achse (A) rechtwinklig liegenden Stirnfläche (12), welche mit der Stützfläche (4) eine Scherkante (13) bildet, ausgestattet ist, und dass das erste und das zweite Aussenwerkzeug (16 und 27, bzw. 60 und 61) als bogenförmig ausgebildete Kurven (17) ausgestaltet ist, deren dem Innenwerkzeug (2) zugewendete Stützflächen (23 bzw. 29) parallel zur Achse (A) und deren obere Fläche (20) parallel zur Stirnfläche (12) des Innenwerkzeuges (2) verläuft.

4.  Vorrichtung nach Anspruch 3, dadurch gekennzeichnet, dass auf der Achse (A) des Innenwerkzeuges (2) ein von diesem antreibbarer, radial-elastisch gelagerter Ring (7) aufgesetzt ist, dessen Durchmesser dem Durchmesser des Innenwerkzeuges (2) (Zylinder 3) entspricht.

5.  Vorrichtung nach Anspruch 3, dadurch gekennzeichnet, dass das Aussenwerkzeug (16,60) radial zur Achse (B) federnd gelagert ist.

6.  Vorrichtung nach einem der Ansprüche 3 oder 5, dadurch gekennzeichnet, dass am Aussenwerkzeug (27,61) oberhalb der Kurve (29) eine im wesentlichen parallel zu deren Stützfläche (29) verlaufende, radial elastisch nachgiebigig gelagerte Stützfläche (51) angeordnet ist.

7.  Vorrichtung nach einem der Ansprüche 3 bis 5, dadurch gekennzeichnet, dass am Aussenwerkzeug (16,60) parallel zur Kurve (17) in einem Abstand, der geringer als die Höhe des Abschnittes (14) des Dosenrumpfes (9) ist, eine zweite Kurve (21) angeordnet ist, auf welcher eine auf der Achse (A) drehfest angebrachte Scheibe (10) mit einem Durchmesser D2 abwälzt.

8.   Vorrichtung nach Anspruch 7, dadurch gekennzeichnet, dass der Durchmesser (D2) der Scheibe (10) als Referenz zum Festlegen der Anschertiefe (s-d2) des Aussenwerkzeuges (16) angebracht ist.

9.   Vorrichtung nach einem der Ansprüche 3 oder 4, dadurch gekennzeichnet, dass am Aussenwerkzeug (16,60) oberhalb der Kurve (17) eine parallel zu deren Stützfläche (23) verlaufende Einstellfläche (38) zum Festlegen der Anschertiefe (s-d2) angeordnet ist.

10.   Vorrichtung nach Anspruch 4, dadurch gekennzeichnet, dass der Ring (7) in einem Einstich (6) am Innenwerkzeug (2) eingesetzt ist und zwischen dem Ring (7) und dem Einstich (6) eine Einlage (8) aus einem elastischen Material (Gummi) eingelegt ist.

11.   Vorrichtung nach einem der Ansprüche 4,    5 und 9, dadurch gekennzeichnet, dass am Aussenwerkzeug (16, 60) parallel zur Stützfläche (23) in einem Abstand, der geringer als die Höhe eines Dosenrumpfabschnittes (14,15) ist, eine zweite parallel zur ersten Stützfläche (23) verlaufende Kurve (21) angebracht ist.

12. Vorrichtung nach einem oder mehreren der Ansprüche 3 bis 5, 7 bis 9 und 11, dadurch gekennzeichnet, dass im Anschluss an die Kurve (17) eine weitere feststehende Kurve (21) angeordnet ist, deren dem Innenwerkzeug (2) zugewendete Fläche (29) in einem Abstand $(r)$ von der Achse (A) des Innenwerkzeuges (2) liegt, welcher kleiner als der halbe Durchmesser (D1) der Stützfläche (4) des Innenwerkzeuges (2) ist.

13. Vorrichtung nach Anspruch 12, dadurch gekennzeichnet, dass die Differenz $(r - D1/2) = 0,2$ bis $0,8$ mm beträgt.

14. Vorrichtung nach Anspruch 1, dadurch gekennzeichnet, dass der Abstand (d1) der Stirnfläche (12) zur oberen Fläche (20) kleiner als 1 mm ist, und der Abstand (d2) der Stützfläche (4) von der dieser zugewendeten Stützfläche (23) der Kurve (17) während des Anscherens 20 - 50 % der Dicke (S) des Bleches des Dosenrumpfes (9) beträgt.

Fig.1

0164310

Fig.2

Fig.3

Fig.4

## EINSCHLÄGIGE DOKUMENTE

EP 85810206.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE - A1 - 2 530 460 (STROOBANTS) | 1 | B 26 D 3/16 |
| A | * Anspruch 1; Fig. 8 * | 2,3 | B 21 D 24/16 |
| | -- | | |
| Y | DE - A1 - 2.452 041 (SCHLOEMANN-SIEMAG AG) | 1 | |
| | * Anspruch 1; Fig. 2,3 * | | |
| | -- | | |
| A | DE - A1 - 2 758 543 (FORMFLO LTD.) | 1 | |
| | * Gesamt * | | |
| | -- | | |
| P,A | DD - A - 161 093 (TOVARNY STROJI-RENSKE TECHNIKY) | 1 | |
| | * Zusammenfassung * | | |
| | -- | | |
| A | DE - C - 169 891 (KLINGHAMMER) | | |
| | * Gesamt * | | |
| | -- | | |
| A | DE - C - 220 526 (BREMER UND BÜCK-MANN) | | |
| | * Gesamt * | | |
| | ---- | | |

| RECHERCHIERTE SACHGEBIETE (Int. Cl.4) |
|---|
| B 26 D 3/00 |
| B 21 D 24/00 |
| B 21 D 51/00 |
| B 21 D 22/00 |
| B 21 D 19/00 |
| B 23 D 19/00 |
| B 23 D 21/00 |

Der vorliegende Recherchenbericht wurde für alle Patentansprüche erstellt.

| Recherchenort | Abschlußdatum der Recherche | Prüfer |
|---|---|---|
| WIEN | 31-07-1985 | MANLIK |